# EUROPEAN PATENT SPECIFICATION

(11) **EP 0 994 271 B1**
(45) Date of publication and mention of the grant of the patent: **29.11.2006**
(21) Application number: 99120567.5
(22) Date of filing: 15.10.1999
(51) Int. Cl.: F16F 15/134

(54) **Torque fluctuation absorbing apparatus**
Vorrichtung zur Dämpfung von Drehmomentschwankungen
Dispositif pour l'amortissement de variations de couple

(30) Priority: 16.10.1998 JP 29476298; 14.05.1999 JP 13352499
(43) Date of publication of application: 19.04.2000
(73) Proprietor: AISIN SEIKI KABUSHIKI KAISHA, Kariya City, Aichi Pref. (JP)
(72) Inventor: Kamiya, Masakazu, Toyoake-shi, Aichi-ken (JP); Sadakari, Shuji, Kariya-shi, Aichi-ken (JP); Ebata, Masaru, Chita-shi, Aichi-ken (JP); Amano, Takaya, Toyota-shi, Aichi-ken (JP); Kusano, Naofumi, Toyota-shi, Aichi-ken (JP); Hosono, Masaki, Toyota-shi, Aichi-ken (JP)
(74) Representative: TBK-Patent

(56) References cited:
- EP-A- 0 529 669
- FR-A- 2 495 256
- GB-A- 2 315 111
- US-A- 4 810 231

## Description

This invention relates to a torque fluctuation absorbing apparatus incorporated into a drive system of an automobile or the like.

As a torque fluctuation absorbing apparatus interposed between an output shaft of an engine and an input shaft of a change gear of an autmobile, the devices having various constructions have been known. For example, in such a device shown in Fig. 7 of JP-A-10-132028, the torsional performance of the coil springs (the relationship between the relative rotating angle between the driving side rotating member and the driven side rotating member and the torque) can be set as a polygonal line for making the torque fluctuation absorbing apparatus exhibit the favorable torque absorbing performance from the low torque zone to the high torque zone, thus minimizing the possibility that such coil springs which perform the transmission of torque between the driving side rotating member and the driven side rotating member come into contact with other members due to a centrifugal force and are damaged by an abrasion.

In this torque fluctuation absorbing apparatus, a guide surface which is directed in a radially inward direction is formed on a driving side rotating member which is integrally rotated with an engine, a circumferential space is defined between an outer periphery of a driven side rotating member which is disposed coaxially and rotatably relative to the driving side rotating member at the inner diameter side of the guide surface and the guide surface, and torque transmitting portions which protrude into the space are respectively mounted on the driving side rotating member and the driven side rotating member.

In the circumferential space defined between these torque transmitting portions, two coil springs having a low spring load and five coil springs having a higher spring load than these coil springs which respectively have their ends supported by spring seats which in turn are slidably guided by the guide surface are installed in a circumferential direction and in series, wherein the coil springs having a low spring load are positioned at both circumferential end portions of the circumferential space. A torsion which exceeds a given maximum twist angle between the driving side rotating member and the driven side rotating member is regulated by the contact relationship which is established by interposing the spring seats between the torque transmitting portion of the driving side rotating member and the torque transmitting portion of the driven side rotating member and simultaneously the close contact of respective coil springs can be avoided.

As mentioned above, in the conventional device which arranges the coil springs having a low spring load at both end portions of the circumferential space defined between both torque transmitting portions, at the time of high-speed driving, the torque fluctuation absorbing performance has not worked sometimes. Followings are considered as the reasons of such a phenomenon.

At the time of high-speed driving, due to a centrifugal force working on the spring seats per se or on the coil springs, the spring seats are pushed to the guide surface of the driving side rotating member and hence, the frictional force between the guide surface and the spring seats becomes large. This frictional force resists the sliding of the spring seats. Because of its small spring load, even when the driving torque is decreased after being deflected by increasing the driving torque, the coil spring having a low spring load cannot slide against the frictional force between the spring seat and the guide surface of the driving side rotating member and therefore cannot be restored. With respect to the coil springs having a high spring load, although the spring load thereof is large, since the number of spring seats which must be slid on the guide surface to restore the coil springs is large, even when the driving torque is decreased after being deflected by increasing the driving torque, these coil springs cannot make the spring seats slide so that the coil springs cannot be restored. As the result, when the high-speed driving is continued, the deflection of the coil springs having a high spring load is gradually increased and eventually a condition is occurs that all spring seats are clamped between the torque transmitting portion of the driving side rotating member and the torque transmitting portion of the driven side rotating member and hence it is no more possible to absorb the torque fluctuation.

To assure the torque fluctuation absorbing performance at the high-speed driving, it is understood that the frictional force at the guided portion of the coil springs produced by the guide surface should be made small by reducing the frictional force between the guide surface of the driving side rotating member and the spring seats or the like. Such measures, however, requires a huge development cost.

The above-mentioned phenomenon that when the high-speed driving is continued, the deflection of the coil springs is gradually increased and hence, the fluctuation of the torque cannot be absorbed also occurs on other known torque fluctuation absorbing device which is constructed such that in a circumferential space defined between a torque transmitting portion of a driving side rotating member and a torque transmitting portion of a driven side rotating member, an arcuate coil spring which is slidably guided by a guide surface is disposed, and the spring loads of respective portions of the coil spring in a circumferential direction are varied in the same manner as the previously mentioned torque fluctuation absorbing apparatus or the spring loads of respective portions of the coil spring in a circumferential direction are set to the same value.

For example, in DE 4215593A1 and DE4341374A1, an arcuate coil spring having a small pitch at both ends thereof or a combination of a coil spring having a low spring load at both ends thereof and a coil spring having a high spring load are employed. In both structures, although a favorable NV performance (noise resistance, vibration resistance) can be expected by means of low spring load portions at both ends at the time of low-torque driving, at the time of high-torque driving, coils located at both ends come into close contact with each other and the weight of this close-contact portion is added as a hysteresis thus deteriorating the NV performance. Furthermore, when this high-torque driving is continued, the ends portions of the coil spring cannot be restored due to the hysteresis of the centrifugal force of its own weight and hence, the coil spring is gradually compressed due to the torque fluctuation and eventually the whole torsion portion is twisted to a stopper so that the torque fluctuation cannot be absorbed thus giving rise to an impact.

EP 0 529 669 discloses a torque fluctuation absorbing apparatus being constructed such that a guide surface which is directed in a radially inward direction is formed on a driving side rotating member which is integrally rotated with an engine. A circumferential space is defined between an outer periphery of a driven side rotating member which is disposed coaxially and rotatably relative to said driving side rotating member at the inner diameter side of said guide surface and said guide surface. Plural torque transmitting portions which protrude in said circumferential space are respectively mounted on said driving side rotating member and said driven side rotating member. Springs being slidably guided by said guide surface are mounted in a circumferential space defined between the torque transmitting portions in a circumferential direction and in series, wherein a maximum value of the spring load of at least one of said springs out of said series positioned between said springs at the end portions out of circumferential end portions of said circumferential space is set to a value smaller than the maximum value of said springs at the end portions.

GB 2 315 111 discloses also a torque fluctuation absorbing apparatus comprising one coil spring, the spring load of which can be changed if needed.

Accordingly, it is an object of the present invention to provide an engine comprising a torque fluctuation absorbing device capable of assuring the torque fluctuation absorbing performance even at the time of high-speed driving.

The object of the present invention is achieved with an engine according to claim 1. Further advantageous developments of the present invention are defined in the subclaims.

With the engine comprising the torque fluctuation absorbing apparatus having a construction according to claim 1, the spring load of the spring positioned at the end portion of the normal rotating direction side out of both circumferential end portions of the circumferential space defined between both torque transmitting portions is set to a value greater than the value necessary for transmitting the maximum driving torque of the engine and hence, even when the high-speed driving is continued, due to the telescopic motion of the spring disposed at the end portion of the normal rotating direction side out of both circumferential end portions of the circumferential space defined between the torque transmitting portions, the torque fluctuation absorbing performance is assured.

With respect to the engine comprising the torque fluctuation absorbing device disclosed in claim 1, by setting the maximum value of the spring load of the spring positioned at the end portion of the reverse rotation side out of both circumferential end portions of the spring to a value greater than the value necessary for transmitting the maximum brake torque of the engine, even when the high-speed engine brake is continued, due to the telescopic motion of the spring positioned at the end portion of the reverse rotating direction side, the torque fluctuation absorbing performance can be assured.

The invention is described in detail on the basis of preferred embodiments with reference to the accompanying drawings.
Fig. 1 is a longitudinal cross-sectional view of the first embodiment of a torque fluctuation absorbing apparatus of the present invention.
Fig. 2 is a front elevation view with a part broken away as seen from the right side of Fig. 1.
Fig. 3 is a diagram showing the torsion characteristics of the torque fluctuation absorbing apparatus shown in Fig. 1 and Fig. 2.
Fig. 4 is a longitudinal cross sectional view of the second embodiment of the torque fluctuation absorbing apparatus of the present invention.
Fig. 5 is a side view with a part broken away as seen from the right portion of Fig. 4.
Fig. 6 is a side view with a part broken away of the third embodiment not covered by the present invention.
Fig. 7 is a diagram showing the torsional performance of the torque fluctuation absorbing apparatus of Fig. 6.
Fig. 8 is a diagram showing the torsional performance of the conventional torque fluctuation absorbing apparatus.
Fig. 9 is a side view with a part broken away of a portion of the fourth embodiment not covered by the present invention.

The present invention, its object and other features of the present invention will be clearly understood from the following explanation in view of the drawings.

### Detailed Description of the preferred Embodiments

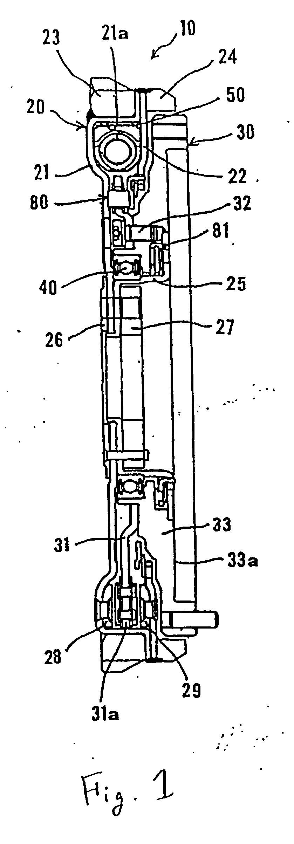

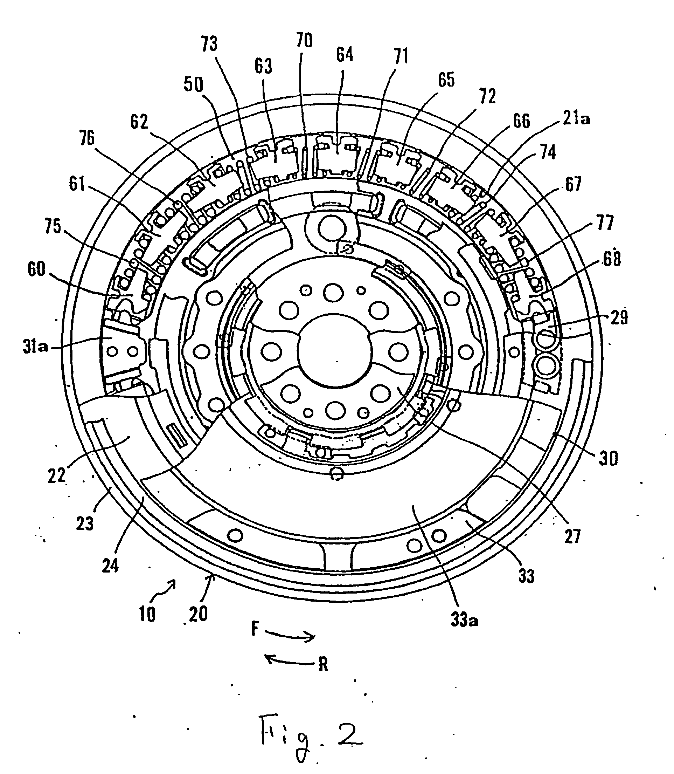

Fig. 1 and Fig. 2 show the first embodiment of a torque fluctuation absorbing apparatus according to the present invention, wherein Fig. 1 is a longitudinal cross-sectional view, Fig. 2 is a front elevation view with a part broken away as seen from the right side of Fig. 1. In Fig. 1 and Fig. 2, a hatching for showing the cross section is omitted for facilitating the understanding of drawings. As shown in Fig. 1 and Fig. 2, a torque fluctuation absorbing apparatus 10 includes a driving side rotating member 20 and a driven side rotating member 30. The driving side rotating member 20 comprises a first drive plate 21, a second drive plate 22, a ring gear 23, an inertia ring 24, an inner plate 25 and spacers 26, 27 as main constituent elements. A cylindrical portion which forms an outer peripheral portion of the first drive plate 21 defines a guide surface 21a on the inner periphery thereof. The first drive plate 21, the second drive plate 22 and the inertial ring 24 have their outer peripheral portions welded to each other, while the ring gear 23 is welded to the first drive plate 21. The first drive plate 21, the inner plate 25 and the spacers 26, 27 are joined by rivets. These elements are joined to an engine by means of bolts (not shown in drawings) which pass through axial holes formed in these elements and are threaded into an output shaft of the engine (not shown in drawings).

The driven side rotating member 30 includes a driven disc 31 which is positioned in axial direction between the first drive plate 21 and the second drive plate 22 and a flywheel 33 to which the driven disc 31 is connected by means of bolts 32. The flywheel 33 is rotatably supported on the inner plate 25 by way of a ball bearing 40. The flywheel 33 has a friction surface 33a for a friction clutch (not shown in drawings) which is provided for performing or cutting off the transmission of torque between the engine and a transmission device (not shown in Between the guide surface 21a of the first drive plate 21 and the outer periphery of the driven disc 31, a circumferential space 50 is defined. In this space 50, a pair of torque transmitting members 28, 29 and a torque transmitting portion 31a are mounted at two positions which are circumferentially shifted 180 degree from each other, wherein a pair of torque transmitting members 28, 29 are secured to the drive plates 21, 22 by means of rivets, while the torque transmitting portion 31a is formed on the outer periphery of the driven disc 31 and is positioned between the torque transmitting members 28, 29.

In two respective circumferential spaces defined between the torque transmitting members 28, 29 and the torque transmitting portion 31a which are circumferentially shifted 180 degree from each other, a plurality of coil springs, preferably coil springs having a low spring load and coil springs having a high spring load are disposed. In this embodiment, three coil springs 70, 71, 72 having a low spring load, two coil springs 73, 74 having an intermediate spring load and three coil springs 75, 76, 77 having a high spring load are disposed circumferentially and in series, wherein these coil springs 70-77 have respective both ends thereof supported by nine spring seats 60-68 which are slidably guided by the guide surface 21a of the first drive plate 21.

Since the coil springs 70-77 have their both ends respectively supported by the spring seats 60-68 guided by the guide surface 21a, even when a centrifugal force is applied, the respective coil springs 70-77 are prevented from coming into contact with cylindrical portion of the first drive plate 21 so that the coil springs 70-77 are prevented from abrasion and damage. Furthermore, protruding portions protruding from two spring seats which respectively support both ends of the respective coil spring 70-77 into the inner peripheral sides of the coil spring come closer to each other corresponding to the increase of an amount of deflection of the coil spring and then come into contact with each other so that an amount of deflection of the coil spring is restricted thus preventing the coil spring from becoming in a close contact condition. As can be understood from the above, the respective spring loads of the coil springs 70-77 are varied corresponding to amounts of deflection of the coil springs. The maximum twist angle between the driving side rotating member 20 and the driven side rotating member 30 is determined in such a manner that the torque transmitting members 28, 29 and the torque transmitting portion 31a are brought into a contact relationship by way of the spring seats 60-68.

The rotating direction of the engine is a direction of normal rotation F shown by an arrow in Fig. 2 and the direction of the engine driving torque which works between the driving side rotating member 20 and the driven side rotating member 30 agrees with the direction of the normal rotation F. Furthermore, the direction of the engine brake torque which works between the driving side rotating member 20 and the driven side rotating member 30 agrees with the rotation of a reverse direction R shown by an arrow in Fig. 2.

According to the present invention, the coil springs 70-77 are arranged from the end portion of the normal rotating direction F side to the end portion of the reverse rotating direction R side of the circumferential space in the order of the coil springs 75, 76 having a high spring load, the coil spring 73 having a intermediate spring load, the coil spring 70, 71, 72 having a low spring load, the coil spring 74 having an intermediate spring load and the coil spring 77 having a high spring load. The maximum values of the respective spring load of the coil springs 75, 76, 77 having a high spring load are set to values greater than values necessary for transmitting the maximum driving torque of the engine. Naturally, the minimum spring load (the spring load at the time of setting the spring) of the coil springs 75, 76, 77 are set to values smaller than the value necessary for transmitting the maximum driving torque of the engine.

The maximum value of the spring load of the coil spring 77 is set to a value greater than the value necessary for transmitting the maximum brake torque of the engine. Naturally, the minimum spring load (spring load at the time of setting spring) of the coil spring 77 is set to a value smaller than the value necessary for transmitting the maximum brake torque of the engine. Furthermore, between the driving side rotating member 20 and the driven side rotating member 30, hysteresis devices 80, 81 which generate a given frictional resistance torque against the relative rotation between them are interposed.

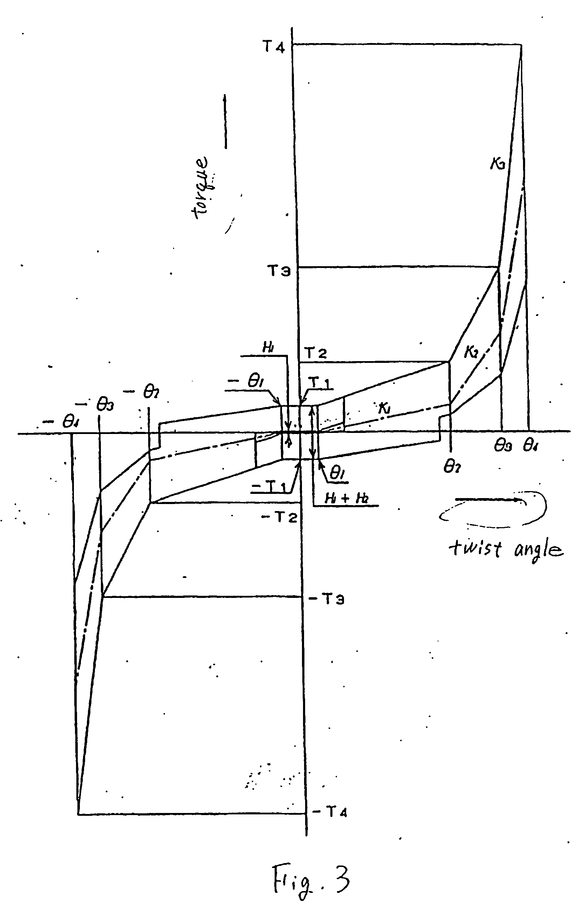

Fig. 3 is a diagram showing the torsional performance of the torque fluctuation absorbing apparatus shown in Fig. 1 and Fig. 2. Fig. 2 shows the torque fluctuation absorbing apparatus in a condition where the twist angle is zero, wherein between the respective torque transmitting portions 31a and the spring seats disposed next to the torque transmitting portions 31a, gaps are defined respectively. These gaps extinguish when the twist angle reaches the twist angle θ1 or -θ1 shown in Fig. 3. When the twist angle is in the range of the twist angle θ1 - θ2 and in the range of the twist angle -θ1 - - θ2 in Fig. 3, the coil springs 70-77 are shrunken or elongated. When the twist angle reaches the twist angle θ2, -θ2 shown in Fig. 3, the coil springs 70-72 having a low spring load are completely shrunken, and when the twist angle is in the range of twist angle 02- θ3 and in the range of twist angle -θ2 - -θ3 shown in Fig. 3, the coil springs 73-77 are shrunken or elongated. When the twist angle reaches the twist angle θ3 , -θ3 shown in Fig. 3, the coil springs 73, 74 are also completely shrunken, and when the twist angle is in the range of twist angle θ3 - θ4 and in the range of twist angle -θ3 - -θ4 shown in Fig. 3, the coil springs 75, 76, 77 having a high spring load are shrunken or elongated. A hysteresis torque H1 shown in Fig. 3 is given by the hysteresis device 81 and a hysteresis torque H2 shown in Fig. 3 is given by the hysteresis device 80.

In the torque fluctuation absorbing apparatus 10 shown in Fig. 1 and Fig. 2, the coil spring 75 having a high spring load is disposed at the end portion of the normal rotating direction side in the circumferential space defined between the torque transmitting members 28, 29 and the torque transmitting portion 31a which are disposed at positions 180 degrees shifted from each other. At the high-speed driving, due to a centrifugal force applied to the spring seats 60-68 and the coil springs 70-77, the frictional force between the spring seats 60-68 and the guide surface 21a is increased and hence, it becomes difficult to slide the spring seats 60-68 respectively. However, the coil spring 75 can be restored by making one spring seat 60 positioned between the end of the coil spring 75 and the torque transmitting portion of the driven side rotating member slide. Furthermore, since the spring load of this spring 75 is set to a value greater than the value necessary for transmitting the maximum driving torque of the engine, even when the high-speed driving is continued, the torque fluctuation absorbing performance can be assured due to the telescopic motion of the coil spring 75.

Furthermore, at the time of the engine brake, although the torque in the reverse rotating direction R is transmitted from the driven side rotating member 30 to the driving side rotating member 20 by way of the coil springs 70-77 arranged in series, the torque fluctuation absorbing performance at this time can be assured by the telescopic motion of the coil spring 77. The coil spring 77 can be restored by making one spring seat 68 slide. Furthermore, since the maximum value of the spring load of this spring 77 is set to a value greater than the value necessary for transmitting the maximum brake torque of the engine, even when the engine brake is continued, the torque fluctuation absorbing performance can be assured due to the telescopic motion of the coil spring 77.

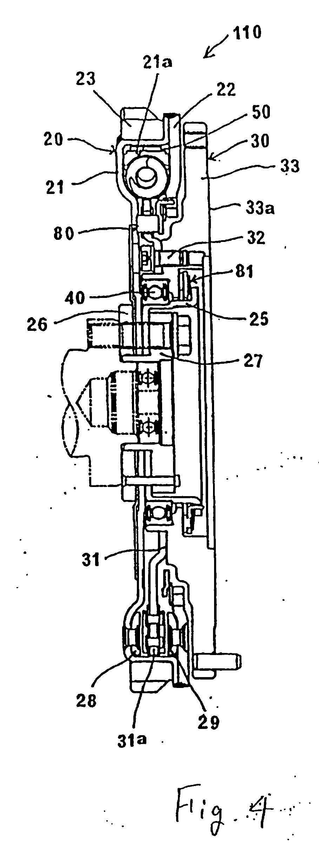

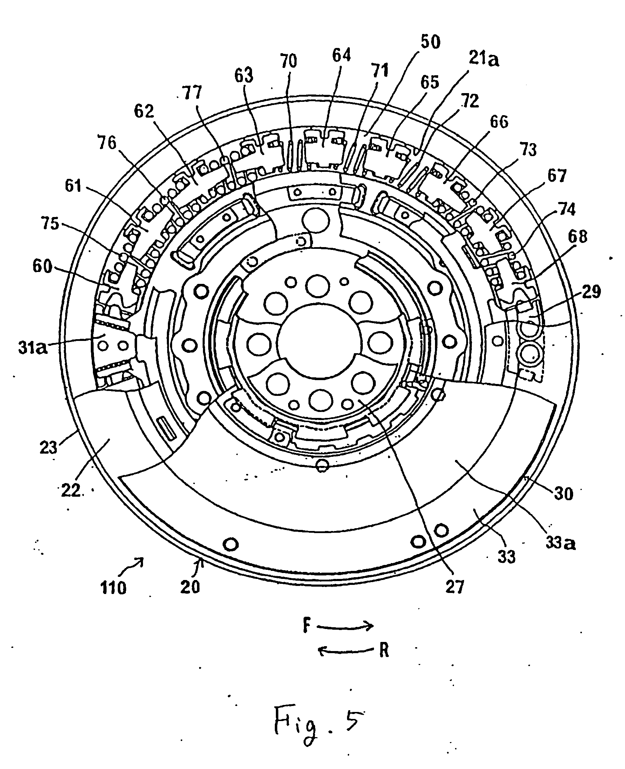

In Fig. 4 and Fig. 5, the second embodiment of the torque fluctuation absorbing apparatus of the present invention is shown. The main difference between this torque fluctuation absorbing apparatus 110 and the torque fluctuation absorbing apparatus 10 shown in Fig. 1 and Fig. 2 lies in the arrangement of the coil springs 70-77. That is, in Fig. 4 and Fig. 5, constituent members which correspond to the constituent members shown in Fig. 1 and Fig. 2 are indicated by the same symbols employed in Fig. 1 and Fig. 2. As can be readily understood from the comparison of Fig. 5 and Fig. 2, in the torque fluctuation absorbing apparatus 110, coil springs 75, 76, 77 having a high spring load, coil springs 70, 71, 72 having a low spring load and coil springs 73, 74 having an intermediate spring load are arranged in this order in a circumferential space defined between the torque transmitting members 28, 29 and the torque transmitting portion 31a in a direction from the end portion of the normal rotating direction F side to the end portion of the reverse rotating direction R side.

The maximum values of the respective spring loads of the coil springs 75, 76, 77 having a high spring load are set to values greater than the value necessary for transmitting the maximum driving torque of the engine in Fig. 4 and Fig. 5. The maximum value of the spring load of the coil spring 74 having an intermediate spring load is set to a value greater than the value necessary for transmitting the maximum brake torque of the engine. Naturally, the minimum spring load (spring load at the time of setting) of the coil spring 74 is set to a value smaller than the value necessary for transmitting the maximum brake torque of the engine. Other difference between the second embodiment and the first embodiment lies in that the inertia ring 24 in Fig. 1 is omitted in the second embodiment. In Fig. 4 and Fig. 5, a hatching which shows a cross section is also omitted.

According to the torque fluctuation absorbing apparatus 110 shown in Fig. 4 and Fig. 5, at the time of the engine brake, the torque in the reverse rotating direction R is transmitted from the driven side rotating member 30 to the driving side rotating member 20 by way of the coil springs 70-77 arranged in series, wherein the coil spring 74 can be restored by making one spring seat 68 slide. Furthermore, since the maximum value of the spring load of this spring 74 is set to a value greater than the value necessary for transmitting the maximum brake torque of the engine, even when the engine brake is continued, the torque fluctuation absorbing performance is assured due to the telescopic motion of the coil spring 74.

Although a plurality of coil springs are disposed in the circumferential space defined between the torque transmitting portion of the driving side rotating member and the torque transmitting portion of the driven side rotating member in the above-mentioned embodiments, one coil spring can be disposed in the circumferential space as described in the following embodiments. In such a case, the spring load of th coil spring positioned at the end portion of the normal rotating direction side out of both circumferential end portions of the circumferential space defined between both torque transmitting portions is set to a value greater than the value necessary for transmitting the maximum driving torque of the engine.

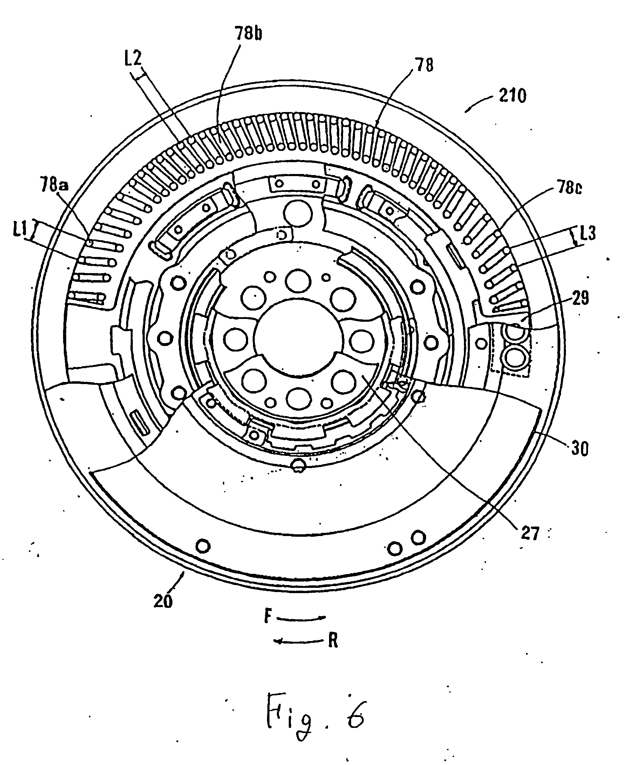

Fig. 6 shows a torque fluctuation absorbing apparatus of the third embodiment not covered by the present invention. In this torque fluctuation absorbing apparatus 210, one arcuate coil spring 78 is disposd in each one of two circumferential spaces. This arcuate coil spring 78 (hereinafter simply called as coil spring 78) is constructed such that the pitches (indicated by L1, L3 in Fig. 6) of the both circumferential end portions 78a, 78c are set to values greater than the pitch (indicated by L2 in Fig. 6) of the intermediate portions 78b (L1 > L2, L3 > L2). Furthermore, the spring load of the end portion 78a of the normal rotating direction F of the coil spring 78 is set to a value greater than the value necessary for transmitting the maximum driving torque of the engine. Due to such a construction, even when the high-speed driving is continued, the end portion 78a of the normal rotating direction F side of the coil spring 78 does not come into a close contact so that the torsional performance shown in Fig. 7 is achieved at the time of minute vibration.

To the contrary, in a conventional device which uses the coil spring or the like with a small pitch at both ends, the coil spring is brought into close contact at a torque equal to or below the maximum driving torque of the engine and hence, an amount of weight of the closely contacted coil spring is added as a hysteresis so that the coil spring exhibits the torsional performance shown in Fig. 8 at the time of minute vibration. As shown in Fig. 8, the hysteresis H4 is considerably large compared to the hysteresis H3 of Fig. 7. In this manner, according to the torque fluctuation absorbing apparatus 210 of the third embodiment, the increase or the rise of the hysteresis at the time of minute vibration can be reduced more properly compared to the conventional device. Furthermore, since the maximum spring load of the coil spring 78 at the end portion 78c of the reverse rotating direction R side is set to a value greater than the value necessary for the transmission of the maximum brake torque of the engine, even when the engine brake is continued, the torque fluctuation absorbing performance can be assured due to the telescopic motion of the coil spring 78.

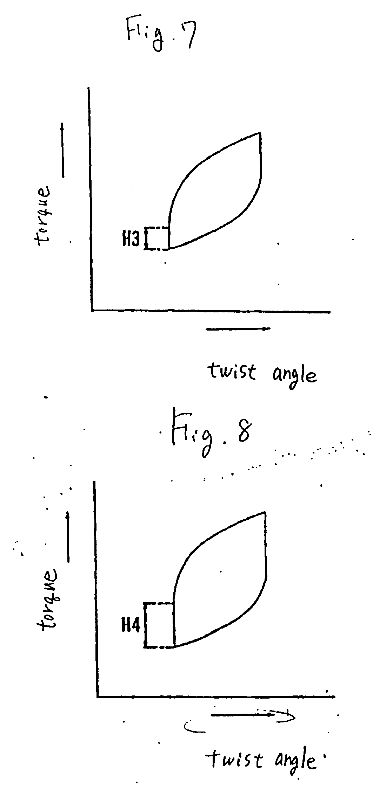

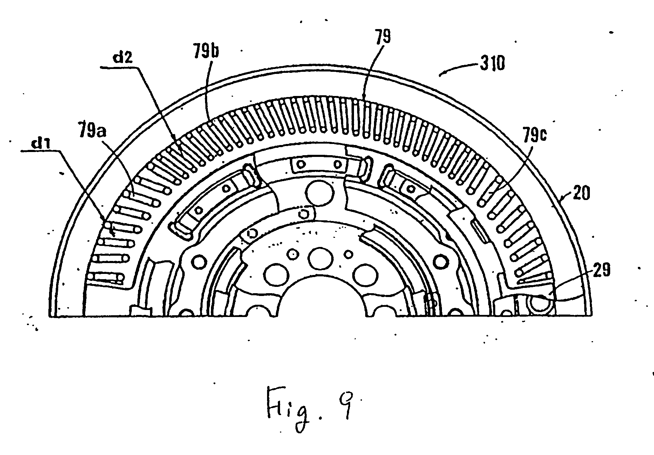

Fig. 9 shows a torque fluctuation absorbing apparatus 310 of the fourth embodiment not covered by the present invention. In this torque fluctuation absorbing apparatus 310, as in the case of the embodiment shown in Fig. 6, one arcuate coil spring 79 is disposd in each one of two circumferential spaces. However, this arcuate coil spring 79 is constructed such that the wire diameter (indicated by d1 in Fig. 9) of both circumferetial end portions 79a, 79c is set to a value greater than the wire diameter (indicated by d2 in Fig. 9) of an intermediate portion 79b (d1 > d2). According to the torque fluctuation absorbing apparatus 310 of the fourth embodiment, compared to the third embodiment, lowering of the torsional rigidity and widening of the twist angle can be further enhanced. Furthrmore, since the wire diameter of the end portions 79a, 79c is large, even when the spring seats are not employed, there is no fear that the arcuate coil spring 79 will be damaged.

As has been described heretofore, according to the torque fluctuation absorbing apparatus of the present invention, the coil spring having a high spring load is disposed at the end portion of the normal rotating direction side out of both circumferential end portions of the circumferential space defined between both torque transmitting portions, and the spring load of this coil spring is set to a value greater than the value necessary for transmitting the maximum driving torque of the engine. Accordingly, even when the high-speed driving is continued, the torque fluctuation absorbing performance can be assured due to the telescopic motion of the coil spring having a high spring load which is disposed at the end portion of the normal rotating direction side out of both circumferential end portions of the circumferential space defined between the torque transmitting portions.

The torque fluctuation absorbing device assures the torque fluctuation absorbing performance even when the high speed driving is contenued. In respective circumferential spaces defined between torque transmitting members 28, 29 of a driving side rotating member and a torque transmitting portion 31a of a driven side rotating member which are shifted 180 degrees in a circumferetial direction, three coil springs 70-72 having a low spring load, two coil springs 73, 74 having an intermediate spring load and three coil springs 75-77 having a high spring load are disposed in a circumferential direction in series. These coil springs have both end thereof respectively supported by nine spring seats 60-68 which in turn are slidably guided by a guide surface 21a of a first drive plate 21. An arrow F indicates a rotating direction of an engine. The maximum value of the spring load of the coil spring 75 is set to a value greater than the value necessary for transmitting the maximum driving torque of the engine and the maximum value of the spring load of the coil spring 77 is set to a value greater than the value necessary for transmitting the maximum brake torque of the engine.

The torque fluctuation absorbing device assures the torque fluctuation absorbing performance even when the high speed driving is contenued. In respective circumferential spaces defined between torque transmitting members 28, 29 of a driving side rotating member and a torque transmitting portion 31a of a driven side rotating member which are shifted 180 degrees in a circumferetial direction, three coil springs 70-72 having a low spring load, two coil springs 73, 74 having an intermediate spring load and three coil springs 75-77 having a high spring load are disposed in a circumferential direction in series. These coil springs have both end thereof respectively supported by nine spring seats 60-68 which in turn are slidably guided by a guide surface 21a of a first drive plate 21. An arrow F indicates a rotating direction of an engine. The maximum value of the spring load of the coil spring 75 is set to a value greater than the value necessary for transmitting the maximum driving torque of the engine and the maximum value of the spring load of the coil spring 77 is set to a value greater than the value necessary for transmitting the maximum brake torque of the engine.

## Claims

1. An engine having an output shaft to which a torque fluctuation absorbing apparatus (10, 110) is attached, the torque fluctuation apparatus being constructed such that a guide surface (21a) which is directed in a radially inward direction is formed on a driving side rotating member (20) which is integrally rotated with the engine, a circumferential space (50) is defined between an outer periphery of a driven side rotating member (30) which is disposed coaxially and rotatably relative to said driving side rotating member (20) at the inner diameter side of said guide surface (21a) and said guide surface (21a), plural torque transmitting portions (31a) which protrude in said circumferential space (50) are respectively mounted on said driving side rotating member (20) and said driven side rotating member (30), coil springs (70-77) being slidably guided by said guide surface (21a) are mounted in the circumferential space (50) defined between the torque transmitting portions (31a) in a circumferential direction and in series, wherein a maximum value of the spring load of at least one of said springs (70, 71, 72, 74, 76) out of said series positioned between said springs (75, 77) at the end portions out of circumferential end portions of said circumferential space (50) is set to a value smaller than maximum values of said springs (75, 77) at the end portions,
**characterized in that**
the maximum value of the spring load of said spring (75) out of said series positioned at the end portion of the normal rotating direction (F) side out of circumferential end portions of said circumferential space (50) is set to a value greater than the value necessary for transmitting the maximum driving torque of the engine in the normal rotating direction, and
the maximum value of said spring load of said spring (77) out of said series disposed at the end portion of the reverse rotating direction (R) side out of circumferential end portions of said circumferential space (50) is set to a value greater than the value necessary for transmitting the maximum brake torque of the engine in the reverse rotating direction.

2. An engine according to claim 1, wherein the springs are a plurality of coil springs (70-77) which have both ends thereof supported by spring seats (60-68) being slidably guided by said guide surface (21a).

3. An engine according to claim 1 or 2, wherein torque transmitting portions (31a) are shifted 180 degree from each other.

4. An engine according to claims 1 to 3, wherein hysteresis devices (80, 81) are interposed between the driving side rotating member (20) and the driven side rotating member (30).

5. An engine according to claim 2, wherein a maximum twist angle between the driving side rotating member (20) and the driven side rotating member (30) is determined in such a manner that the torque transmitting portions (31a) are brought into a contact relationship by way of the spring seats (60-68).

6. A engine according to claim 4, wherein the hysteresis devices (80, 81) have different hysteresis characteristic each other.

## Patentansprüche

1. Verbrennungsmotor, der eine Ausgabewelle hat, an der ein Drehmomentfluktuationsabsorbiergerät (10, 110) befestigt ist, wobei das Drehmomentfluktuationsabsorbiergerät so konstruiert ist, dass
eine Führungsfläche (21a), die in eine radial nach innen weisende Richtung gerichtet ist, an einem antriebsseitigen Rotationselement (20) ausgebildet ist, das einstückig mit dem Verbrennungsmotor gedreht wird,
ein Umfangsraum (50) zwischen einem Außenumfang eines abtriebsseitigen Rotationselements (30), das koaxial und drehbar relativ zu dem antriebsseitigen Rotationselement (20) bei der Innendurchmesserseite der Führungsfläche (21a) angeordnet ist, und der Führungsfläche (21a) definiert ist,
mehrere Drehmoment übertragende Abschnitte (31a), die in den Umfangsraum (50) hervorstehen, jeweils an dem antriebsseitigen Rotationselement (20) und dem abtriebsseitigen Rotationselement (30) montiert sind,
Druckfedern (70-77), die gleitbar durch die Führungsfläche (21a) geführt sind, in dem Umfangsraum (50) montiert sind, der zwischen den Drehmoment übertragenden Abschnitten (31a) in einer Umfangsrichtung und in Reihe definiert ist,
wobei ein maximaler Wert der Federlast von wenigstens einer der Federn (70, 71, 72, 74, 76) aus der Reihe, die zwischen den Federn (75, 77) bei den Endabschnitten von Umfangsendabschnitten des Umfangsraums (50) positioniert ist, auf einen Wert eingestellt ist, der kleiner ist als maximal Werte der Federn (75, 77) bei den Endabschnitten,
**dadurch gekennzeichnet, dass**
der maximale Wert der Federlast der Feder (75) aus der Reihe, die bei dem Endabschnitt bei der Seite der normalen Rotationsrichtung (F) von den Umfangsendabschnitten des Umfangsraums (50) positioniert ist, auf einen Wert gesetzt ist, der größer ist als der Wert, der für ein Übertragen des maximalen Antriebsdrehmoments des Verbrennungsmotors in der normalen Rotationsrichtung nötig ist, und
der maximale Wert der Federlast der Feder (77) aus der Reihe, die bei dem Endabschnitt bei
der Seite der umgekehrten Rotationsrichtung von den Umfangsendabschnitten des Umfangsraums (50) angeordnet ist, auf einen Wert eingestellt ist, der größer ist als der Wert, der für ein Übertragen des maximalen Bremsmoments des Verbrennungsmotors in der umgekehrten Rotationsrichtung erfordert ist.

2. Verbrennungsmotor gemäß Anspruch 1, wobei die Federn eine Vielzahl von Druckfedern (70 bis 77) sind, deren beide Enden durch Federsitze (60 bis 68) abgestützt sind, die gleitbar durch die Führungsfläche (21a) geführt sind.

3. Verbrennungsmotor gemäß Anspruch 1 oder 2, wobei die Drehmoment übertragenden Abschnitte (31a) um 180° voneinander verschoben sind.

4. Verbrennungsmotor gemäß Ansprüchen 1 bis 3, wobei Hysteresevorrichtungen (80, 81) zwischen dem antriebsseitigen Rotationselement (20) und dem abtriebsseitigen Rotationselement (30) angeordnet sind.

5. Verbrennungsmotor gemäß Anspruch 2, wobei ein maximaler Verdrehwinkel zwischen dem antriebsseitigen Rotationselement (20) und dem abtriebsseitigen Rotationselement (30) in solch einer Weise bestimmt ist, dass die Drehmoment übertragenden Abschnitte (31a) in eine Kontaktbeziehung durch die Federsitze (60 bis 68) gebracht werden.

6. Verbrennungsmotor gemäß Anspruch 4, wobei die Hysteresevorrichtungen (80, 81) verschiedene Hystereseeigenschaften zueinander haben.

## Revendications

1. Moteur comportant un arbre de sortie auquel un dispositif d'absorption de fluctuation de couple (10, 110) est fixé, le dispositif de fluctuation de couple étant conçu de telle sorte qu'une surface de guidage (21a) qui est orientée dans une direction radialement vers l'intérieur, est formée sur un élément rotatif du côté menant (20) qui tourne de façon solidaire du moteur, un espace circonférentiel (50) est défini entre une périphérie extérieure d'un élément rotatif du côté mené (30) qui est disposé coaxialement et avec possibilité de rotation par rapport audit élément rotatif du côté menant (20) au niveau du côté du diamètre intérieur de ladite surface de guidage (21a) et ladite surface de guidage (21a), plusieurs parties de transmission de couple (31a) qui dépassent dans ledit espace circonférentiel (50) sont respectivement installés sur ledit élément rotatif du côté mené (20) et ledit élément rotatif du côté mené (30), des ressorts hélicoïdaux (70 à 77) étant guidés avec possibilité de coulissement par ladite surface de guidage (21a) sont montés dans l'espace circonférentiel (50) défini entre les parties de transmission de couple (31a) dans une direction circonférentielle et en série, où une valeur maximum de la charge de rappel d'au moins un desdits ressorts (70, 71, 72, 74, 76) à partir de ladite série positionnée entre lesdits ressorts (75, 77) aux parties d'extrémité en dehors des parties d'extrémité circonférentielles dudit espace circonférentiel (50), est établie à une valeur inférieure aux valeurs maximums desdits ressorts (75, 77) aux parties d'extrémité,
**caractérisé en ce que**
la valeur maximum de la charge de rappel dudit ressort (75) à partir de ladite série positionnée au niveau de la partie d'extrémité du côté du le sens de rotation normal (F) en dehors des parties d'extrémité circonférentielles dudit espace circonférentiel (50) est établie en une valeur supérieure à la valeur nécessaire pour transmettre le couple d'entraînement maximum du moteur dans le sens de rotation normal, et
la valeur maximum de ladite charge de rappel dudit ressort (77) à partir de ladite série disposée au niveau de la partie d'extrémité du côté du sens de rotation inverse (R) en dehors des parties d'extrémité circonférentielles dudit espace circonférentiel (50) est établie à une valeur supérieure à la valeur nécessaire pour transmettre le couple de freinage maximum du moteur dans le sens de rotation inverse.

2. Moteur selon la revendication 1, dans lequel les ressorts sont une pluralité de ressorts hélicoïdaux (70 à 77) qui ont leurs deux extrémités supportées par des sièges de ressorts (60 à 68) qui sont guidés avec possibilité de coulissement par ladite surface de guidage (21a).

3. Moteur selon la revendication 1 ou 2, dans lequel les parties de transmission de couple (31a) sont décalées de 180 degrés les unes des autres.

4. Moteur selon les revendications 1 à 3, dans lequel des dispositifs d'hystérésis (80, 81) sont intercalés entre l'élément rotatif du côté menant (20) et l'élément rotatif du côté mené (30).

5. Moteur selon la revendication 2, dans lequel un angle de torsion maximum entre l'élément rotatif du côté menant (20) et l'élément rotatif du côté mené (30) est déterminé de telle manière que les parties de transmission de couple (31a) sont amenées dans une relation de contact par l'intermédiaire des sièges de ressorts (60 à 68).

6. Moteur selon la revendication 4, dans lequel les dispositifs d'hystérésis (80, 81) présentent des caractéristiques d'hystérésis différentes l'un de l'autre.
